# EUROPEAN PATENT SPECIFICATION

(11) **EP 4 455 596 B1**
(45) Date of publication and mention of the grant of the patent: **13.08.2025**
(21) Application number: 23169453.0
(22) Date of filing: 24.04.2023
(51) Int. Cl.: F28F 9/00

(54) **HEAT EXCHANGER AND ASSOCIATED MANUFACTURING METHOD**
WÄRMETAUSCHER UND ZUGEHÖRIGES HERSTELLUNGSVERFAHREN
ÉCHANGEUR DE CHALEUR ET PROCÉDÉ DE FABRICATION ASSOCIÉ

(43) Date of publication of application: 30.10.2024
(73) Proprietor: MAHLE International GmbH, 70376 Stuttgart (DE)
(72) Inventor: KUNZ, Marcin, 63-500 Ostrzeszow (PL); OBSADNY, Krzysztof, PL-63-440 Raszkow (PL); RACHWALSKI, Pawel, PL-63-400 Ostrow Wielkoposki (PL)
(74) Representative: BRP Renaud & Partner mbB Rechtsanwälte Patentanwälte Steuerberater

(56) References cited:
- CN-A- 101 226 029
- DE-A1- 102011 013 043
- FR-A1- 2 735 855
- JP-A- H0 325 297
- JP-A- H10 170 186
- US-A1- 2020 064 084
- US-B2- 10 077 954

## Description

The present invention relates to a heat exchanger for media-separated heat transfer between a first fluid and a second fluid according to the preamble of claim 1. Such a heat exchanger is known from US 10 077 954 B2.

The invention also relates to a method for manufacturing such a heat exchanger.

A generic heat exchanger is known from EP 3 054 257 A1 and has a heat exchanger block which has a block longitudinal direction, a block transverse direction and a block height direction which are perpendicular to one another. The heat exchanger block has two longitudinal block ends facing away from each other in the longitudinal block direction and two transverse block ends facing away from each other in the block transverse direction. Further, the heat exchanger block has a plurality of tubes through which the first fluid can flow, which extend parallel to the block longitudinal direction and are arranged adjacent to each other in the block transverse direction. A plurality of interspaces or interstices or intermedia spaces through which the second fluid can flow are also formed on the heat exchanger block, each interstice being located between two tubes adjacent to each other in the block transverse direction and passing through the heat exchanger block in the block height direction. When flowing through the intermediate spaces, the second fluid flows around the tubes from the outside. Fins or rips may be arranged in the interspaces to improve heat transfer. The heat exchanger block has a head shell at each of its longitudinal block ends, which extend parallel to the block transverse direction, which are penetrated by the tubes, which are brazed to the tubes and which each have two shell transverse ends facing away from one another in the transverse direction of the heat exchanger block. The heat exchanger block has a cover plate at each of its block transverse ends, which extend parallel to the block longitudinal direction, which are soldered to the head shells and which each have two plate longitudinal ends facing away from one another in the block longitudinal direction. In the known heat exchanger, the head shells each form a component of a cooler box which has a side wall running around along the respective head shell and is closed by a lid, the lid having lugs at its longitudinal ends which engage around the side wall.

When soldering the heat exchanger block, it may be necessary to pretension the head shells against the cover plates in the block longitudinal direction and in the block transverse direction in order to achieve the desired strength. Such pretensioning can be realized, for example, with the aid of additional pretensioning devices which have to be fitted before the brazing process, which have to remain on the heat exchanger block during the quenching process and which have to be removed again after the quenching process. The assembly and disassembly of these preloading devices increases the manufacturing effort. In addition, the preloading devices require space in the brazing system, which impairs efficient utilization of the brazing system.

DE 601 10 872 T2 discloses a cooler box unit for two heat exchangers, each of which has a cooler box. The two cooler boxes are arranged next to each other and fastened to each other by means of a positive-locking connection in the form of a flared connection.

DE 37 05 939 A1 describes a heat exchanger in which an expansion tank is positively attached to a cooler box of the heat exchanger by means of a snap-in connection.

From JP 2001-194088 A, a heat exchanger is known in which a radiator box has a plurality of lugs at its end facing the respective head shell, each of which lugs embraces the respective head shell in one of the intermediate spaces.

DE 694 06 506 T2 describes a heat exchanger in which a tie rod is arranged in the heat exchanger block in the block longitudinal direction between the head shells, extending parallel to the block transverse direction and firmly connecting the two cover plates.

From DE 10 2005 004 521 A1, a heat exchanger arrangement is known in which a first heat exchanger has two head tubes instead of two head shells, which form a header tube and a manifold tube and which are attached to the cover plates of a second heat exchanger, such that the heat exchanger block of the first heat exchanger runs parallel to the heat exchanger block of the second heat exchanger and is adjacent thereto in the block height direction.

US 4 917 180 A describes a heat exchanger that does not require cover plates.

A heat exchanger is known from KR 2003 0046166 A in which two head tubes are used instead of two head shells to form a header tube and a distribution tube. The respective head tube is closed at its end faces in each case by a cover from which a spigot projects. The cover plates engage positively over the cover of the respective head pipe by means of a lug. The respective lug engages around the spigot and is also secured by a web which engages over the lug and is latched to the cover.

The present invention deals with the problem of providing an improved or at least another embodiment for a heat exchanger of the type described above or for an associated manufacturing process, which is characterized in particular by a reduced manufacturing cost.

This problem is solved according to the invention by the subject-matter of the independent claim. Advantageous embodiments are the subject of the dependent claims.

The invention is based on the general idea of providing the heat exchanger block with four anchorages, each of which positively connects one of the longitudinal ends of the plates directly to one of the transverse ends of the shells. Such a positive connection creates a form fit. Such anchorages can be configured particularly easily in such a way that the cover plates and the head shells can already be pretensioned or preloaded against each other during assembly of the heat exchanger block, i.e. before the heat exchanger block is soldered. As a result, it is possible to properly solder the heat exchanger block without the use of additional preloading devices. The desired preloads between the head shells and the cover plates are created by the anchorages at least before the brazing process and during the brazing process. After brazing, the anchorages remain on the heat exchanger block and can improve the strength of the heat exchanger block in the area of the anchorages, i.e. in the corner areas of the heat exchanger block, by means of the positive connection thus realized.

In the present context, a "configuration" is synonymous with a "design" so that the phrase "configured so that" is synonymous with the phrase "designed so that."

The invention specifies that the respective anchorage has a lug extending in the block longitudinal direction with a hook projecting from the lug in the block transverse direction and a hook opening open in the block transverse direction with an opening edge bounding or bordering the hook opening in the block longitudinal direction. The hook engages the hook opening in the block transverse direction and is supported on the opening edge in the block longitudinal direction. Such a configuration with lug, hook, hook opening and opening edge is comparatively simple and inexpensive to implement.

According to a preferred embodiment, the lug can be formed at the respective longitudinal end of the plate, while the hook opening is formed at the respective transverse end of the shell. This configuration is particularly easy to implement. The lug can thereby form an integral part or section of the respective cover plate at particularly low cost.

Another advantageous embodiment proposes that the hook is formed by a 180° bent end portion of the lug. This allows the hook to be formed integrally on the lug by a simple forming operation, which can be realized comparatively inexpensively. Preferably, the end section of the lug is bent so that it comes into contact with the rest of the lug over its entire surface. This doubles the lug in the area of the hook.

According to the invention, it is expedient for the hook to have a hook end supported on the opening edge, which is supported on the opening edge via a linear or point contact zone or via several linear or point contact zones. Such a line-shaped or point-shaped support improves the reliability of the positioning between hook and opening edge in the block transverse direction.

A configuration in which the respective contact zone penetrates into a surface of the opening edge in the block longitudinal direction is advantageous. This creates a form fit in the block transverse direction between the hook and the opening edge, which fixes the positioning achieved between the hook and the hook opening.

According to another advantageous embodiment, it may be provided that the hook end is chamfered in such a way that the hook end has an edge on a side facing away from the lug with which the hook end is supported on the opening edge. Such a chamfer at the hook end can be implemented comparatively easily, resulting in a linear contact zone which can be configured comparatively sharp-edged, for example to promote penetration into the surface of the opening edge.

Expediently, the opening edge can run around closed along the hook opening. This reinforces and stabilizes the component in which the hook opening is located in the area of the hook opening. In particular, this reinforces and stabilizes the respective shell transverse end. Expediently, the respective hook opening can be designed as a through opening that completely penetrates a wall of the component equipped with the hook opening. Such a through-opening can be produced particularly easily, e.g. by a punching operation.

According to an advantageous embodiment, the respective head shell can have a base plate through which the tubes pass and a shell edge running along the base plate, the respective hook opening being formed on the shell edge. By integrating the respective hook opening into the shell edge, the anchoring can be realized particularly easily.

Expediently, the shell rim can have at least four rim sections separated from one another by interruptions, which follow one another circumferentially along the base plate and have two end sections which are located at the shell transverse ends and have the respective hook opening. This makes it possible, in particular, to produce the shell edge by forming, for example by producing the interruptions in a plate which is subsequently formed to form the shell edge. At the same time as the interruptions are formed, openings for the tubes to pass through and the hook openings can then also be produced.

In another advantageous embodiment, provision can be made for a step to be formed at each of the longitudinal ends of the plate, which step is configured in such a way that the respective shell transverse end rests against the respective longitudinal end of the plate in the block longitudinal direction and in the block transverse direction in the region of the step and is soldered. The soldering in two different directions results in a particularly high strength in the heat exchanger block.

The respective anchoring can now be expediently formed in the area of the step, in particular in order to generate the pretension desired for the brazing process in the block longitudinal direction and in the block transverse direction.

A method according to the invention for manufacturing a heat exchanger of the type described above is characterized in that the head shells are arranged on the cover plates so that the shell transverse ends contact the longitudinal plate ends. After arranging the head shells on the cover plates, the cover plates are fastened to the head shells with the anchorages. In particular, the anchorages can be configured in such a way that, when the cover plates are fastened to the head shells, they generate a pretension or preload in the block longitudinal direction and in the block transverse direction in the zones of contact between the cover plates and the head shells. As a result, the cover plates rest against the head shells in the block longitudinal direction and in the block transverse direction under pretension. After the cover plates are attached to the head shells, the heat exchanger block is brazed. By using the anchorages, separate pretensioning devices can be dispensed with.

According to an advantageous embodiment, the respective anchorage may have, prior to fastening the cover plates to the head shells, a lug extending at an angle of inclination inclined to the block longitudinal direction with a hook projecting from the lug and a hook opening open in the block transverse direction with an opening edge delimiting the hook opening of the block longitudinal direction. After arranging the head shells on the cover plates, for fastening the cover plates to the head shells, the lugs are plastically bent over to reduce the angle of inclination until the hook engages in the hook opening in the block transverse direction and is supported on the opening edge in the block longitudinal direction. In other words, to fasten the cover plates to the head shells and in particular to generate the pretension, the lugs are plastically deformed. This can be achieved comparatively easily, while at the same time realizing an effective form-fit connection.

A configuration in which the hook of the respective lug has a hook end that has one linear or point contact zone or several linear or point contact zones is particularly advantageous. Plastic bending of the lugs then takes place until the respective contact zone penetrates a surface of the opening edge and generates a pretension driving the respective shell traverse end in the block longitudinal direction and in the block transverse direction against the respective plate longitudinal end. After forming the lugs, the cover plates and the head shells are braced and preloaded against each other in the region of the anchorages, i.e. in the regions of the heat exchanger block, in the block longitudinal direction and in the block transverse direction.

Further important features and advantages of the invention are apparent from the depending claims, from the drawings, and from the accompanying figure description based on the drawings.

It is understood that the features mentioned above and those still to be explained below can be used not only in the combination indicated in each case, but also in other combinations or on their own, without leaving the scope of the invention defined by the claims. Components of a superordinate unit, such as a device, an apparatus or an arrangement, which are mentioned above and which are still to be mentioned below and which are designated separately, may form separate components or parts of this unit or be integral areas or sections of this unit, even if this is shown otherwise in the drawings.

Preferred embodiments of the invention are shown in the drawings and will be explained in more detail in the following description, wherein identical reference signs refer to identical or similar or functionally identical components.

The figures depict, each schematically,
- Figure 1: a side view of a heat exchanger,
- Figure 2: an isometric view of the heat exchanger in the area of a cover plate,
- Figure 3: an isometric view of the heat exchanger in a corner area of a heat exchanger block,
- Figure 4: a sectional view of the heat exchanger block in the area of an anchorage,
- Figure 5: a side view of the heat exchanger block in the anchorage area before anchorage is created a and after anchorage is created b,
- Figure 6: an isometric view of the heat exchanger block in the anchorage area before anchorage is created a and after anchorage is created b.

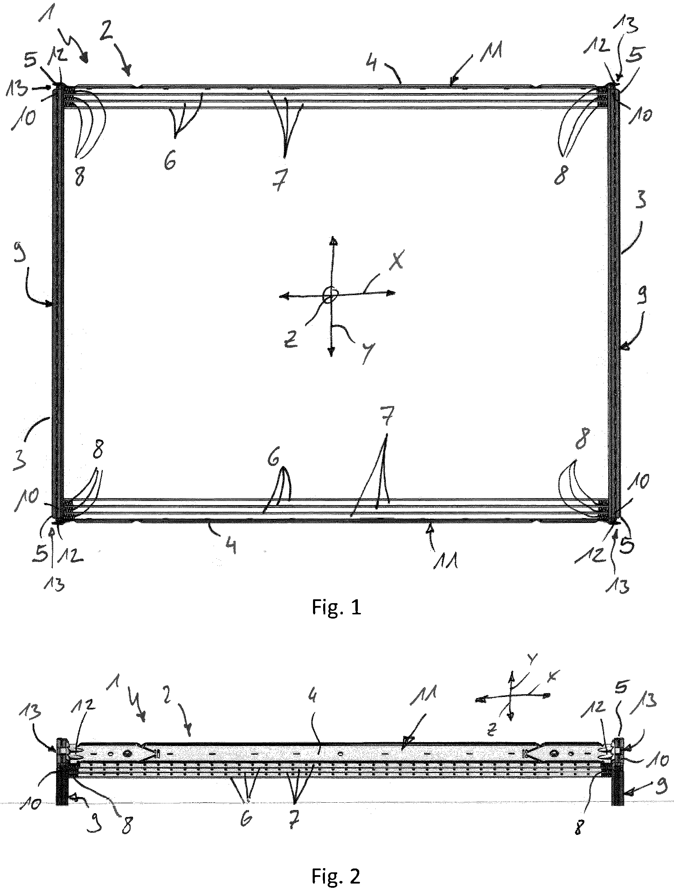

According to Figure 1, a heat exchanger 1 used for media-separated heat transfer between a first fluid and a second fluid comprises a heat exchanger block 2 having a block longitudinal direction X, a block transverse direction Y and a block height direction Z extending perpendicularly to each other. In Figure 1, the block longitudinal direction X extends horizontally, while the block transverse direction Y extends vertically. The block height direction Z extends perpendicular to the drawing plane in Figure 1. The heat exchanger block 2 has two block longitudinal ends 3 facing away from each other in the block longitudinal direction X and two block transverse ends 4 facing away from each other in the block transverse direction Y. The heat exchanger block 2 is configured rectangularly here, so that it also has four corner regions 5.

According to Figures 1 to 6, the heat exchanger block 2 has several tubes 6 through which the first fluid can flow, but only some of them are shown in the figures, which are located in the area of the respective block transverse end 4. The tubes 6 extend parallel to the block longitudinal direction X and are arranged next to each other in the block transverse direction Y. A plurality of intermediate spaces 7 through which the second fluid can flow are also formed on the heat exchanger block 2, each of which is located between two tubes 6 which are adjacent in the block transverse direction Y and which pass through the heat exchanger block 2 in the block heigth direction Z. In the interspaces 7, fins 8 or ribs 8 may be arranged in the usual manner, but these are indicated in the figures only in the region of the respective longitudinal end 3 of the block. The heat exchanger block 2 can also be referred to as a fin-and-tube block 2 due to the arrangement of tubes 6 and intermediate spaces 7 with fins 8. Furthermore, this is a heat exchanger 1 of the tube bundle type and not the plate type.

Furthermore, the heat exchanger block 2 has a head shell 9 at each of its longitudinal block ends 3, which extends parallel to the block transverse direction Y, is penetrated by the tubes 6, is soldered to the tubes 6 and has two shell transverse ends 10 facing away from each other in the block transverse direction Y. Furthermore, the heat exchanger block 2 has at each of its block transverse ends 4 a cover plate 11 which extends parallel to the block longitudinal direction X, is soldered to the head shells 9 and has in each case two longitudinal plate ends 12 facing away from each other in the block longitudinal direction X. In the heat exchanger 1 presented here, the heat exchanger block 2 is also equipped with four anchorages 13, each of which is located in one of the corner regions 5 and each of which positively connects one of the longitudinal plate ends 12 directly to one of the shell transverse ends 10.

According to Figures 2 to 6, the respective anchorage 13 may have a lug 14 extending in the block longitudinal direction X with a hook 15 projecting from the lug 14 in the block transverse direction Y and a hook opening 16 open in the block transverse direction Y with an opening edge 17 bounding the hook opening 16 in the block longitudinal direction X. The hook 15 engages in the hook opening 16 in the block transverse direction Y and is supported there on the opening edge 17 in the block longitudinal direction X. The hook 15 engages in the hook opening 16 in the block transverse direction Y and is supported there on the opening edge 17 in the block longitudinal direction X. In the embodiment examples shown here, the lug 14 is formed at the respective longitudinal end 12 of the panel. Expediently, the lug 14 is formed directly and integrally on the respective cover plate 11. The hook opening 16 is formed at the respective shell transverse end 10. As shown, the hook 15 may expediently be formed by an end portion of the lug 14 bent over by 180°. For this purpose, the end section in question is bent over in such a way that the lug 14 is doubled in the region of the hook 15. The bending is carried out in such a way that the bent end section lies flat against the remaining lug 14.

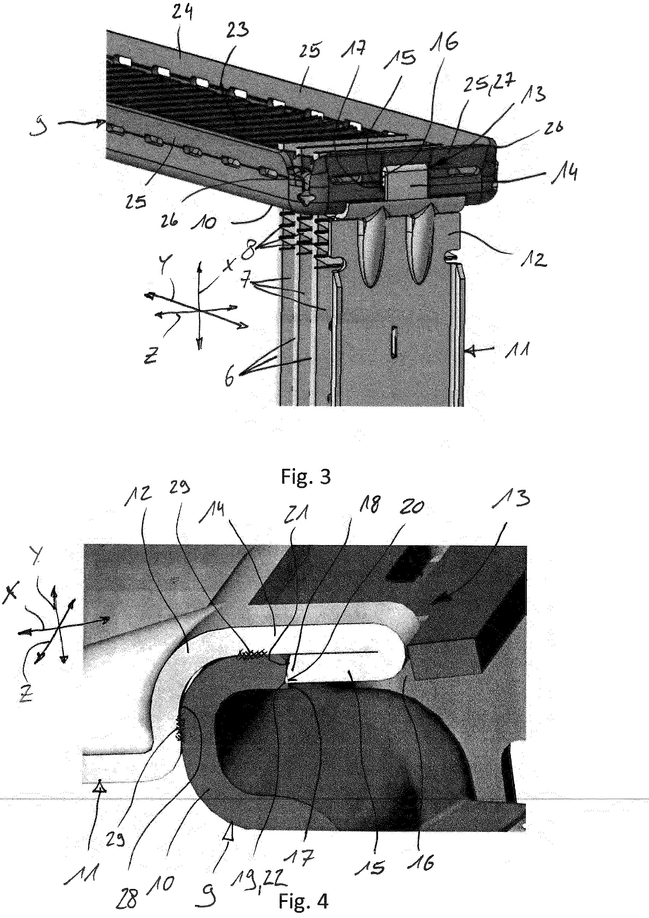

As can be seen in particular from Figure 4, the hook 15 can have a hook end 18 supported on the opening edge 17, which is supported on the opening edge 17 via a line-shaped contact zone 19. In this case, the line-shaped contact zone 19 penetrates a surface 20 of the opening edge 17 in the block longitudinal direction X. The line-shaped contact zone 19 can be realized, for example, in that the hook end 18 is chamfered, i.e. has a chamfer 21. In the example, the chamfer 21 is realized in such a way that the hook end 18 has an edge 22 on a side facing away from the lug 14, with which the hook end 18 is supported on the opening edge 17. The edge 22 is formed here by the line-shaped contact zone 19. It is clear that in another embodiment, instead of a single line-shaped contact zone 19, several line-shaped contact zones 19 or one or more point-shaped contact zones 19 can also be implemented. However, the chamfer 21 for creating the edge 22 can be realized comparatively easily.

In the example shown here, the opening edge 17 runs closed around along the hook opening 16. The hook 15 is configured rectangularly here, so that the hook opening 16 is also configured rectangularly. The hook opening 16 is implemented as a through opening.

In the example shown here, the respective head shell 9 has a base plate 23 and a shell edge 24 running along the base plate 23. The base plate 23 is penetrated by the tubes 6 and can have corresponding passage openings with pull-throughs for this purpose. The respective hook opening 16 is preferably formed at the shell edge 24, in such a way that the hook opening 16 passes through the shell edge in the block transverse direction Y. In this case, the shell edge 24 may have at least four edge sections 25, each of which is separated from the other by interruptions 26. The edge sections 25 run around along the base plate 23 and each comprise an end section 27 at the shell transverse ends 10, at which the hook opening 16 is formed.

At the longitudinal plate ends 12, in the preferred embodiment shown here, a step 28 is formed in each case, which is configured in such a way that the respective shell traverse end 10 rests in the region of the step 28 against the respective longitudinal plate end 12 in the longitudinal block direction X and in the block transverse direction Y and is soldered thereto. Corresponding soldered joints are indicated by hatching in Figure 4 and labeled 29. The respective anchorage 13 is preferably formed in the area of the respective step 28. With the aid of the anchorage 13, a pretension in the longitudinal direction X and the block transverse direction Y can be generated between the respective cover plate 11 and the respective head shell 9 for the soldering process.

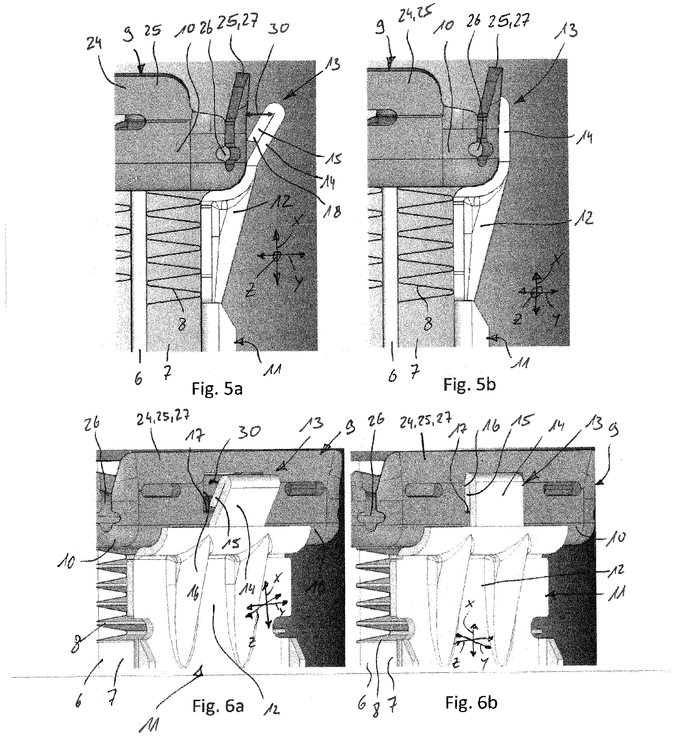

In the following, a method for manufacturing the heat exchanger 1 of the type described above is explained in more detail with reference to Figures 5 and 6. First, the individual components of the heat exchanger block 2 are arranged against each other in the desired manner. In particular, for this purpose, the tubes 6 can be inserted into the head shells 9 and the fins 8 can be positioned in the spaces 7. In any case, the head shells 9 are arranged on the cover plates 11 in such a way that the shell transverse ends 10 touch or contact the plate longitudinal ends 12. This contacting is expediently carried out in the aforementioned stage 28. After the head shells 9 have been arranged on the cover plates 11, the state reproduced in Figures 5a and 6a is present.

The cover plates 11 are then attached to the head shells 9 using the anchorages 13. The condition after the anchorages 13 have been created, i.e. after the cover plates 11 have been fastened to the head shells 9 with the aid of the anchorages 13, is shown in Figures 5b and 6b.

After attaching the cover plates 11 to the head shells 9, the heat exchanger block 2 is soldered. After soldering, the assembled state of Figures 1 to 4 is present.

According to Figures 5a and 6a, it may be expedient for the respective anchorage 13 to have an angle of inclination 30 between the respective lug 14 and the block longitudinal direction X before the cover plates 11 are fastened to the head shells 9. The angle of inclination 30 is expediently selected to be large enough to allow the respective head shell 9 to be positioned on the step 28 without colliding with the hook 15. After the desired positioning and alignment of the head shells 9 on the cover plates 11, the respective lug 14 for fastening the cover plate 11 to the head shell 9 is plastically bent over to reduce the angle of inclination 30. The respective lug 14 is bent over at least until the hook 15 engages in the hook opening 16 in the block transverse direction Y and is supported on the opening edge 17 in the block longitudinal direction X.

If, as in the example shown here, the hook 15 has a hook end 18 which has a linear contact zone 19, the bending of the respective lug 14 is expediently carried out until the respective contact zone 19 penetrates into the surface 20 of the opening edge 17 and also generates a pretension driving the respective shell transverse end 10 in the block longitudinal direction X and in the block transverse direction Y against the respective plate longitudinal end 12. This can be realized in particular with the aid of the chamfer 21 presented here, the edge 22 of which is spaced from the lug 14. When the lug 14 is bent over, a bending axis running parallel to the block height direction Z generates a rotary movement for the edge 22, so that the edge 22 moves in the block longitudinal direction X and in the block transverse direction Y relative to the opening edge 17. In the process, the edge 22 comes into contact with the surface 20 of the opening edge 17 and penetrates it. Continued bending over then, after the edge 22 penetrates the surface 20 of the opening edge 17, causes the edge 22 to drive the opening edge 17 in the block longitudinal direction X as well as in the block transverse direction Y due to the rotational movement of the edge 22, which creates the desired preload between the respective shell transverse end 10 and the respective panel longitudinal end 12 in the block longitudinal direction X and in the block transverse direction Y.

## Claims

1. A heat exchanger (1) for media-separated heat transfer between a first fluid and a second fluid,
- comprising a heat exchanger block (2) having a block longitudinal direction (X), a block transverse direction (Y) and a block height direction (Z) which are perpendicular to each other,
- wherein the heat exchanger block (2) has two block longitudinal ends (3) facing away from each other in the block longitudinal direction (X) and two block transverse ends (4) facing away from each other in the block transverse direction (Y),
- wherein the heat exchanger block (2) has a plurality of tubes (6) through which the first fluid can flow, which tubes extend parallel to the block longitudinal direction (X) and are arranged next to one another in the block transverse direction (Y),
- wherein a plurality of interstices (7) through which the second fluid can flow are formed on the heat exchanger block (2), which interstices (7) are each located between two tubes (6) which are adjacent in the block transverse direction (Y) and which pass through the heat exchanger block (2) in the block height direction (Z),
- wherein the heat exchanger block (2) has at each of its longitudinal block ends (3) a head shell (9) which extend parallel to the block transverse direction (Y), are penetrated by the tubes (6), are soldered to the tubes (6) and each have two shell transverse ends (10) facing away from one another in the block transverse direction (Y),
- wherein the heat exchanger block (2) has a cover plate (11) at each of its block transverse ends (4), which extend parallel to the block longitudinal direction (X), are soldered to the head shells (9) and each have two plate longitudinal ends (12) facing away from one another in the block longitudinal direction (X),
- wherein the heat exchanger block (2) has four anchorages (13), each of which connects one of the longitudinal plate ends (12) directly to one of the transverse shell ends (10) in a form-fitting manner,
- wherein the respective anchorage (13) has a lug (14) extending in the block longitudinal direction (X) and having a hook (15) projecting from the lug (14) in the block transverse direction (Y), and a hook opening (16) open in the block transverse direction (Y) and having an opening edge (17) bounding the hook opening (16) in the block longitudinal direction (X),
- wherein the hook (15) engages in the hook opening (16) in the block transverse direction (Y) and is supported on the opening edge (17) in the block longitudinal direction (X),
**characterized in**
- **that** the hook (15) has a hook end (18) which is supported on the opening edge (17) via a linear or point contact zone (19) or via a plurality of linear or point contact zones (19).

2. The heat exchanger (1) according to claim 1,
**characterized in**
- **that** the lug (14) is formed at the respective plate longitudinal end (12),
- **that** the hook opening (16) is formed at the respective shell transverse end (10).

3. The heat exchanger (1) according to claim 1 or 2,
**characterized in**
- **that** the hook (15) is formed by an end portion of the lug (14) bent over by 180°, in particular in such a way that the bent-over end portion lies flat against the remaining lug (14).

4. The heat exchanger (1) according to any one of the preceding claims, **characterized in**
- **that** the respective contact zone (19) penetrates into a surface (20) of the opening edge (17) in the block longitudinal direction (X).

5. The heat exchanger (1) according to any one of the preceding claims, **characterized in**
- **that** the hook end (18) is chamfered in such a way that the hook end (18) has an edge (22) on a side facing away from the lug (14), with which edge (22) the hook end (18) is supported on the opening edge (17).

6. The heat exchanger (1) according to any one of the preceding claims, **characterized in**
- **that** the opening edge (17) runs around closed along the hook opening (16).

7. The heat exchanger (1) according to any one of the preceding claims, **characterized in**
- **that** the respective head shell (9) has a base plate (23) through which the tubes (6) pass and a shell rim (24) running along the base plate (23),
- **that** the respective hook opening (16) is formed at the shell rim (24).

8. The heat exchanger (1) according to claim 7,
**characterized in**
- **that** the shell rim (24) has at least four rim sections (25) which are separated from one another by interruptions (26) and follow one another circumferentially along the base plate (23) and have two end sections (27) which are located at the shell transverse ends (10) and have the respective hook opening (16).

9. The heat exchanger (1) according to any of the preceding claims,
**characterized in**
- **that** a step (28) is formed at each of the longitudinal plate ends (12) in such a way that the respective transverse shell end (10) bears against and is soldered to the respective longitudinal plate end (12) in the block longitudinal direction (X) and in the block transverse direction (Y) in the region of the step (18).

10. The heat exchanger (1) according to claim 9,
**characterized in**
- **that** the respective anchorage (13) is formed in the area of the step (28).

11. A method of manufacturing a heat exchanger (1) according to any one of the preceding claims,
- in which the head shells (9) are arranged on the cover plates (11) so that the shell transverse ends (10) contact the plate longitudinal ends (12),
- in which, after the head shells (9) have been arranged on the cover plates (11), the cover plates (11) are fastened to the head shells (9) by means of the anchorages (13),
- in which the heat exchanger block (2) is soldered after the cover plates (11) have been fastened to the head shells (9),
- wherein the respective anchorage (13) has, before the cover plates (11) are fastened to the head shells (9), a lug (14) which extends at an angle of inclination (30) inclined with respect to the block longitudinal direction (X) and has a hook (15) projecting from the lug (14), and a hook opening (16) which is open in the block transverse direction (Y) and has an opening edge (17) which bounds the hook opening (16) in the block longitudinal direction (X),
**characterized in**
- **that**, after the head shells (9) have been arranged on the cover plates (11) for fastening the cover plates (11) to the head shells (9), the lugs (14) for reducing the angle of inclination (30) are plastically bent over until the hook (15) engages in the hook opening (16) in the block transverse direction (Y) and is supported on the opening edge (17) in the block longitudinal direction (X).

12. The method according to claim 11,
**characterized in**
- **that** the hook (15) of the respective lug (14) has a hook end (18) which has a line-shaped or point-shaped contact zone (19) or a plurality of line-shaped or point-shaped contact zones (19),
- **that** the bending of the lugs (14) takes place until the respective contact zone (19) penetrates a surface (20) of the opening edge (17) and generates a preload driving the respective shell transverse end (10) in the block longitudinal direction (X) and in the block transverse direction (Y) against the respective plate longitudinal end (12).

## Patentansprüche

1. Wärmetauscher (1) zur mediengetrennten Wärmeübertragung zwischen einem ersten Fluid und einem zweiten Fluid,
- umfassend einen Wärmetauscherblock (2), der eine Blocklängsrichtung (X), eine Blockquerrichtung (Y) und eine Blockhöhenrichtung (Z) aufweist, die senkrecht aufeinander stehen,
- wobei der Wärmetauscherblock (2) zwei in der Blocklängsrichtung (X) voneinander abgewandte Blocklängsenden (3) und zwei in der Blockquerrichtung (Y) voneinander abgewandte Blockquerenden (4) aufweist,
- wobei der Wärmetauscherblock (2) eine Vielzahl von Rohren (6) aufweist, durch die das erste Fluid strömen kann, wobei sich die Rohre parallel zu der Blocklängsrichtung (X) erstrecken und in der Blockquerrichtung (Y) nebeneinander angeordnet sind,
- wobei am Wärmetauscherblock (2) eine Vielzahl von Zwischenräumen (7) ausgebildet ist, durch die das zweite Fluid strömen kann, wobei sich die Zwischenräume (7) jeweils zwischen zwei in der Blockquerrichtung (Y) benachbarten Rohren (6) befinden, die durch den Wärmetauscherblock (2) in der Blockhöhenrichtung (Z) hindurchgehen,
- wobei der Wärmetauscherblock (2) an seinen Blocklängsenden (3) jeweils eine Kopfschale (9) aufweist, die sich parallel zu der Blockquerrichtung (Y) erstrecken, von den Rohren (6) durchdrungen sind, mit den Rohren (6) verlötet sind und jeweils zwei in der Blockquerrichtung (Y) voneinander abgewandte Schalenquerenden (10) aufweisen,
- wobei der Wärmetauscherblock (2) an seinen Blockquerenden (4) jeweils eine Deckplatte (11) aufweist, die sich parallel zu der Blocklängsrichtung (X) erstrecken, mit den Kopfschalen (9) verlötet sind und jeweils zwei in der Blocklängsrichtung (X) voneinander abgewandte Plattenlängsenden (12) aufweisen,
- wobei der Wärmetauscherblock (2) vier Verankerungen (13) aufweist, die jeweils eines der Plattenlängsenden (12) direkt mit einem der Schalenquerenden (10) formschlüssig verbinden,
- wobei die jeweilige Verankerung (13) eine sich in der Blocklängsrichtung (X) erstreckende Lasche (14) mit einem in der Blockquerrichtung (Y) von der Lasche (14) abstehenden Haken (15) und eine in der Blockquerrichtung (Y) offene Hakenöffnung (16) mit einem die Hakenöffnung (16) in der Blocklängsrichtung (X) begrenzenden Öffnungsrand (17) aufweist,
- wobei der Haken (15) in der Blockquerrichtung (Y) in die Hakenöffnung (16) eingreift und sich in der Blocklängsrichtung (X) am Öffnungsrand (17) abstützt,
**dadurch gekennzeichnet,**
- **dass** der Haken (15) ein Hakenende (18) aufweist, das sich über eine linienförmige oder punktförmige Kontaktzone (19) oder über eine Vielzahl von linienförmigen oder punktförmigen Kontaktzonen (19) am Öffnungsrand (17) abstützt.

2. Wärmetauscher (1) nach Anspruch 1,
**dadurch gekennzeichnet,**
- **dass** die Lasche (14) am jeweiligen Plattenlängsende (12) ausgebildet ist,
- **dass** die Hakenöffnung (16) am jeweiligen Schalenquerende (10) ausgebildet ist.

3. Wärmetauscher (1) nach Anspruch 1 oder 2,
**dadurch gekennzeichnet,**
- **dass** der Haken (15) durch einen um 180° umgebogenen Endabschnitt der Lasche (14) ausgebildet ist, insbesondere derart, dass der umgebogene Endabschnitt flächig an der verbleibenden Lasche (14) anliegt.

4. Wärmetauscher (1) nach einem der vorstehenden Ansprüche,
**dadurch gekennzeichnet,**
- **dass** die jeweilige Kontaktzone (19) in der Blocklängsrichtung (X) in eine Oberfläche (20) des Öffnungsrandes (17) eindringt.

5. Wärmetauscher (1) nach einem der vorstehenden Ansprüche,
**dadurch gekennzeichnet,**
- **dass** das Hakenende (18) derart abgeschrägt ist, dass das Hakenende (18) auf einer der Lasche (14) abgewandten Seite einen Rand (22) aufweist, wobei sich das Hakenende (18) mit dem Rand (22) auf dem Öffnungsrand (17) abstützt.

6. Wärmetauscher (1) nach einem der vorstehenden Ansprüche,
**dadurch gekennzeichnet,**
- **dass** der Öffnungsrand (17) geschlossen um die Hakenöffnung (16) herum verläuft.

7. Wärmetauscher (1) nach einem der vorstehenden Ansprüche,
**dadurch gekennzeichnet,**
- **dass** die jeweilige Kopfschale (9) eine Grundplatte (23), durch die die Rohre (6) hindurchgehen, und einen entlang der Grundplatte (23) verlaufenden Schalenrand (24) aufweist,
- **dass** die jeweilige Hakenöffnung (16) am Schalenrand (24) ausgebildet ist.

8. Wärmetauscher (1) nach Anspruch 7,
**dadurch gekennzeichnet,**
- **dass** der Schalenrand (24) mindestens vier Randabschnitte (25) aufweist, die durch Unterbrechungen (26) voneinander getrennt sind und umlaufend entlang der Grundplatte (23) aufeinanderfolgen und zwei an den Schalenquerenden (10) liegende Endabschnitte (27) aufweisen und die jeweilige Hakenöffnung (16) aufweisen.

9. Wärmetauscher (1) nach einem der vorstehenden Ansprüche,
**dadurch gekennzeichnet,**
- **dass** eine Stufe (28) derart an jedem der Längsplattenenden (12) ausgebildet ist, dass das jeweilige Schalenquerende (10) in der Blocklängsrichtung (X) und in der Blockquerrichtung (Y) im Bereich der Stufe (18) an dem jeweiligen Längsplattenende (12) anliegt und mit diesem verlötet ist.

10. Wärmetauscher (1) nach Anspruch 9,
**dadurch gekennzeichnet,**
- **dass** die jeweilige Verankerung (13) im Bereich der Stufe (28) ausgebildet ist.

11. Verfahren zum Herstellen eines Wärmetauschers (1) nach einem der vorstehenden Ansprüche,
- bei dem die Kopfschalen (9) so auf den Deckplatten (11) angeordnet sind, dass die Schalenquerenden (10) die Plattenlängsenden (12) kontaktieren,
- bei dem, nachdem die Kopfschalen (9) auf den Deckplatten (11) angeordnet worden sind, die Deckplatten (11) mittels der Verankerungen (13) an den Kopfschalen (9) befestigt werden,
- bei dem der Wärmetauscherblock (2), nachdem die Deckplatten (11) an den Kopfschalen (9) befestigt worden sind, verlötet wird,
- wobei die jeweilige Verankerung (13), bevor die Deckplatten (11) an den Kopfschalen (9) befestigt werden, eine sich unter einem Neigungswinkel (30) schräg zur Blocklängsrichtung (X) erstreckende Lasche (14) mit einem von der Lasche (14) abstehenden Haken (15) und eine in der Blockquerrichtung (Y) offene Hakenöffnung (16) mit einem die Hakenöffnung (16) in der Blocklängsrichtung (X) begrenzenden Öffnungsrand (17) aufweist,
**dadurch gekennzeichnet,**
- **dass**, nachdem die Kopfschalen (9) auf den Deckplatten (11) angeordnet wurden, zur Befestigung der Deckplatten (11) auf den Kopfschalen (9) die Laschen (14) zur Verringerung des Neigungswinkels (30) plastisch umgebogen werden, bis der Haken (15) in der Blockquerrichtung (Y) in die Hakenöffnung (16) eingreift und sich in der Blocklängsrichtung (X) am Öffnungsrand (17) abstützt.

12. Verfahren nach Anspruch 11,
**dadurch gekennzeichnet,**
- **dass** der Haken (15) der jeweiligen Lasche (14) ein Hakenende (18) aufweist, das eine linien- oder punktförmige Kontaktzone (19) oder eine Vielzahl von linien- oder punktförmigen Kontaktzonen (19) aufweist,
- **dass** das Umbiegen der Laschen (14) erfolgt, bis die jeweilige Kontaktzone (19) in eine Fläche (20) des Öffnungsrandes (17) eindringt und eine das jeweilige Schalenquerende (10) in der Blocklängsrichtung (X) und in der Blockquerrichtung (Y) gegen das jeweilige Plattenlängsende (12) treibende Vorspannung erzeugt.

## Revendications

1. Échangeur de chaleur (1) pour un transfert de chaleur à milieu séparé entre un premier fluide et un second fluide,
- comprenant un bloc échangeur de chaleur (2) présentant une direction longitudinale de bloc (X), une direction transversale de bloc (Y) et une direction de hauteur de bloc (Z) qui sont perpendiculaires les unes aux autres,
- dans lequel le bloc échangeur de chaleur (2) présente deux extrémités longitudinales de bloc (3) opposées l'une à l'autre dans la direction longitudinale de bloc (X) et deux extrémités transversales de bloc (4) opposées l'une à l'autre dans la direction transversale de bloc (Y),
- dans lequel le bloc échangeur de chaleur (2) présente une pluralité de tubes (6) à travers lesquels le premier fluide peut s'écouler, lesquels tubes s'étendent parallèlement à la direction longitudinale de bloc (X) et sont agencés les uns à côté des autres dans la direction transversale de bloc (Y),
- dans lequel une pluralité d'interstices (7) à travers lesquels le second fluide peut s'écouler, sont formés sur le bloc échangeur de chaleur (2), lesquels interstices (7) sont chacun situés entre deux tubes (6) qui sont adjacents dans la direction transversale de bloc (Y) et qui traversent le bloc échangeur de chaleur (2) dans la direction de hauteur de bloc (Z),
- dans lequel le bloc échangeur de chaleur (2) présente, à chacune de ses extrémités longitudinales (3), une coque de tête (9) qui s'étendent parallèlement à la direction transversale de bloc (Y), sont traversées par les tubes (6), sont soudées aux tubes (6) et présentent chacune deux extrémités transversales de coque (10) opposées l'une à l'autre dans la direction transversale de bloc (Y),
- dans lequel le bloc échangeur de chaleur (2) présente une plaque de recouvrement (11) à chacune de ses extrémités transversales de bloc (4), qui s'étendent parallèlement à la direction longitudinale de bloc (X), sont soudées aux coques de tête (9) et présentent chacune deux extrémités longitudinales de plaque (12) opposées l'une à l'autre dans la direction longitudinale de bloc (X),
- dans lequel le bloc échangeur de chaleur (2) présente quatre ancrages (13), qui relient chacun l'une des extrémités de plaque longitudinales (12) directement à l'une des extrémités de coque transversales (10) par complémentarité de forme,
- dans lequel l'ancrage respectif (13) présente une patte (14) s'étendant dans la direction longitudinale de bloc (X) et présentant un crochet (15) faisant saillie à partir de la patte (14) dans la direction transversale de bloc (Y), et une ouverture de crochet (16) ouverte dans la direction transversale de bloc (Y) et présentant un bord d'ouverture (17) délimitant l'ouverture de crochet (16) dans la direction longitudinale de bloc (X),
- dans lequel le crochet (15) vient en prise dans l'ouverture de crochet (16) dans la direction transversale de bloc (Y) et est supporté sur le bord d'ouverture (17) dans la direction longitudinale de bloc (X),
**caractérisé en ce que**
- le crochet (15) présente une extrémité de crochet (18) qui s'appuie sur le bord d'ouverture (17) par l'intermédiaire d'une zone de contact linéaire ou ponctuelle (19) ou par l'intermédiaire d'une pluralité de zones de contact linéaires ou ponctuelles (19).

2. Échangeur de chaleur (1) selon la revendication 1,
**caractérisé en ce que**
- la patte (14) est formée à l'extrémité longitudinale de plaque respective (12),
- l'ouverture de crochet (16) est formée à l'extrémité transversale de coque respective (10).

3. Échangeur de chaleur (1) selon la revendication 1 ou 2,
**caractérisé en ce que**
- le crochet (15) est formé par une partie d'extrémité de la patte (14) recourbée à 180°, en particulier de telle manière que la partie d'extrémité recourbée repose à plat contre la patte restante (14).

4. Échangeur de chaleur (1) selon l'une quelconque des revendications précédentes,
**caractérisé en ce que**
- la zone de contact respective (19) pénètre dans une surface (20) du bord d'ouverture (17) dans la direction longitudinale de bloc (X).

5. Échangeur de chaleur (1) selon l'une quelconque des revendications précédentes,
**caractérisé en ce que**
- l'extrémité de crochet (18) est chanfreinée de telle manière que l'extrémité de crochet (18) présente un bord (22) sur un côté opposé à la patte (14), bord (22) avec lequel l'extrémité de crochet (18) s'appuie sur le bord d'ouverture (17).

6. Échangeur de chaleur (1) selon l'une quelconque des revendications précédentes,
**caractérisé en ce que**
- le bord d'ouverture (17) s'étend de manière fermée le long de l'ouverture de crochet (16).

7. Échangeur de chaleur (1) selon l'une quelconque des revendications précédentes,
**caractérisé en ce que**
- la coque de tête respective (9) présente une plaque de base (23) à travers laquelle passent les tubes (6) et un rebord de coque (24) s'étendant le long de la plaque de base (23),
- l'ouverture de crochet respective (16) est formée au niveau du rebord de coque (24).

8. Échangeur de chaleur (1) selon la revendication 7,
**caractérisé en ce que**
- le rebord de coque (24) présente au moins quatre sections de rebord (25) qui sont séparées les unes des autres par des interruptions (26) et se succèdent de manière circonférentielle le long de la plaque de base (23) et présentent deux sections d'extrémité (27) qui sont situées aux extrémités transversales de coque (10) et présentent l'ouverture de crochet respective (16).

9. Échangeur de chaleur (1) selon l'une quelconque des revendications précédentes,
**caractérisé en ce que**
- une surépaisseur (28) est formée à chacune des extrémités de plaque longitudinales (12) de telle sorte que l'extrémité de coque transversale respective (10) repose contre et soit soudée à l'extrémité de plaque longitudinale respective (12) dans la direction longitudinale de bloc (X) et dans la direction transversale de bloc (Y) dans la région de la surépaisseur (18).

10. Échangeur de chaleur (1) selon la revendication 9,
**caractérisé en ce que**
- l'ancrage respectif (13) est formé dans la zone de la surépaisseur (28).

11. Procédé de fabrication d'un échangeur de chaleur (1) selon l'une quelconque des revendications précédentes,
- dans lequel les coques de tête (9) sont agencées sur les plaques de recouvrement (11) de telle sorte que les extrémités transversales de coque (10) viennent en contact avec les extrémités longitudinales de plaque (12),
- dans lequel, après que les coques de tête (9) ont été agencées sur les plaques de recouvrement (11), les plaques de recouvrement (11) sont fixées aux coques de tête (9) au moyen des ancrages (13),
- dans lequel le bloc échangeur de chaleur (2) est soudé après que les plaques de recouvrement (11) ont été fixées aux coques de tête (9),
- dans lequel l'ancrage respectif (13) présente, avant que les plaques de recouvrement (11) ne soient fixées aux coques de tête (9), une patte (14) qui s'étend selon un angle d'inclinaison (30) incliné par rapport à la direction longitudinale de bloc (X) et présente un crochet (15) faisant saillie à partir de la patte (14), et une ouverture de crochet (16) qui est ouverte dans la direction transversale de bloc (Y) et présente un bord d'ouverture (17) qui délimite l'ouverture de crochet (16) dans la direction longitudinale de bloc (X),
**caractérisé en ce que**
- après que les coques de tête (9) ont été agencées sur les plaques de recouvrement (11) pour fixer les plaques de recouvrement (11) aux coques de tête (9), les pattes (14) pour réduire l'angle d'inclinaison (30) sont pliées plastiquement jusqu'à ce que le crochet (15) vienne en prise dans l'ouverture de crochet (16) dans la direction transversale de bloc (Y) et soit supporté sur le bord d'ouverture (17) dans la direction longitudinale de bloc (X).

12. Procédé selon la revendication 11,
**caractérisé en ce que**
- le crochet (15) de la patte respective (14) présente une extrémité de crochet (18) qui présente une zone de contact linéaire ou ponctuelle (19) ou une pluralité de zones de contact linéaires ou ponctuelles (19),
- la flexion des pattes (14) se produit jusqu'à ce que la zone de contact respective (19) pénètre dans une surface (20) du bord d'ouverture (17) et génère une précharge entraînant l'extrémité transversale de coque respective (10) dans la direction longitudinale de bloc (X) et dans la direction transversale de bloc (Y) contre l'extrémité longitudinale de plaque respective (12).
